# EUROPEAN PATENT SPECIFICATION

(11) **EP 2 009 484 B1**
(45) Date of publication and mention of the grant of the patent: **07.11.2012**
(21) Application number: 08158807.1
(22) Date of filing: 23.06.2008
(51) Int. Cl.: G02C 5/22

(54) **Elastic hinge for spectacles**
Elastisches Scharnier für Brillen
Charnière élastique pour lunettes

(30) Priority: 26.06.2007 IT UD20070116
(43) Date of publication of application: 31.12.2008
(73) Proprietor: Visottica Industrie S.p.A. con unico socio, 31058 Susegana (TV) (IT)
(72) Inventor: Montalban, Rinaldo, 30100, Venezia (IT)
(74) Representative: Petraz, Gilberto Luigi

(56) References cited:
- EP-A- 0 462 936
- EP-A- 1 708 012
- WO-A-97/39377
- WO-A-03/071338
- WO-A-2005/008317
- DE-A1- 2 242 044
- DE-A1- 2 948 113

## Description

### FIELD OF THE INVENTION

The present invention concerns an elastic hinge for spectacles used to articulate a temple with a front piece of a frame for spectacles.

### BACKGROUND OF THE INVENTION

Elastic hinges are known, to articulate with respect to each other a temple and a front piece of a frame for spectacles. Such elastic hinges allow to maintain adequate pressure on the user's temples, and improve the wearability of the spectacles.

This traditional type of elastic hinge generally consists of two articulation elements pivoted to each other and associated, respectively, a first to the temple and a second to the front piece, or more commonly to the lug of the front piece.

In particular, the first articulation element comprises one or more longitudinal cavities, in which a respective elastic slider or flex is slidingly housed, generally with a helical spring or other type, which allows the extra travel on opening and the elasticization of the hinge.

Furthermore, when there are several elastic sliders, a reciprocal temporary movement of the two articulation elements is possible, on the plane on which they lie.

In the field of spectacles production and their components, there is an ever-growing need to make temples with a rectangular, ovoid or similar section, having a relatively limited thickness and a greater width, to create a close-fitting effect on the temples.

Types of elastic hinges are known, provided with a box-like body in which the longitudinal cavities to house the elastic sliders are made. Normally the box-like body is completely or partly incorporated into the temple.

This type of known hinge has a rather large bulk and, especially if it requires complex working, such as broaching, inside the box-like body in order to keep the flex slider guided, it is very complex to make, which affects the costs.

Furthermore, the hinging portions of this type of known hinge protrude from the bulk of the thickness of the temple, and thus interrupt the aesthetic linearity of the temple and of the lug; also, in cases where the temple and the lug fit adjacent to the user's temples, the hinging portions contact the user's face.

Elastic hinges are also known in which the longitudinal cavities are made directly inside the temple made of plastic material, in order to house slidingly the relative elasticization sliders.

In this type of known hinge, in order to reduce and simplify the working inside the longitudinal cavities, the axial rotation of the elasticization slider with respect to the temple is permitted.

This disadvantage causes considerable complications during the automated assembly steps of the spectacles, since prior steps must be provided to control and align the hinging portions before reciprocal connection by a pin.

The prior art document EP1708012 discloses a hinge with an elastic slider; document EP0462936 discloses a hinge with two parallel elastic sliders.

Purpose of the present invention is to achieve, simply and economically, an elastic hinge for spectacles which is completely comprised within the bulk of the temple and which obviates both the functional, aesthetic, and also assembly disadvantages found in the state of the art.

The Applicant has devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention or variants to the main inventive idea.

An elastic hinge for spectacles according to the present invention is applied to articulate with respect to each other two components, such as a temple and a front piece or lug of a frame for spectacles. The elastic hinge according to the invention substantially consists of two articulation elements pivoted to each other and associated respectively to the temple and the front piece, or to the lug of the front piece.

The association of the two articulation elements with the respective components of the frames can advantageously but not exclusively be made by drowning the articulation elements during the steps of producing the components of the frame, by injection.

According to some variants, the association of at least one of the two articulation elements with the respective components is effected by same-shape coupling, assembly, welding, or is directly made on the components, or other.

The hinge provides that at least the articulation element associated with one of the two components of the frame comprises at least a longitudinal cavity open toward its head surface. The articulation element also comprises at least an elastic slider housed slidingly inside the relative longitudinal cavity.

The elastic slider comprises a relative hinging portion protruding from the head surface.

Moreover, the first articulation element normally has its thickness "S" substantially equal to or less than the thickness of the temple.

According to a variant, the first articulation element comprises at least a box-like body integrated, or able to be integrated, into the temple and in which the longitudinal cavity is made.

According to another variant, the longitudinal cavity is made directly on the body of the temple, possibly providing metal housing tubes.

According to a characteristic feature of the present invention, the first articulation element comprises at least an abutment element made on the head surface in a position adjacent to the aperture of the longitudinal cavity. The abutment element is shaped so as to cooperate through lateral sliding with the hinging portion, to guide the sliding and constrain the axial rotation of the elastic slider.

According to a variant, the abutment element cooperates with the second hinging portion to define precise positions of extra-opening and closing of the temple.

With the present invention it is thus possible to guarantee the guided sliding and rotational constraint of the elastic slider, allowing it to maintain a correct position with respect to the relative longitudinal cavity and easier automation in assembly.

In this way, the invention obtains reduced bulk, especially in relation to the thickness of the temple, an effective functioning of the hinge, therefore maintaining the aesthetic line of the frame unchanged, and can also optimize the reciprocal sliding, the fluidity of movement, and substantially eliminate vibrations, noises and excessive wear of the components.

According to a variant of the present invention, the first articulation element comprises two sliders, substantially parallel and independent with respect to each other, and housed slidingly in two longitudinal cavities of the box-like body. In this case, the abutment element is made on the head surface of the box-like body in an intermediate position between the two sliders, so as to cooperate with both hinging portions, so as to guarantee the correct sliding and prevent axial rotation thereof.

In another variant, in which the box-like body is provided, the latter comprises at least a visible portion, such as a surface, a decoration or other, substantially co-planar with or slightly protruding from an external surface of the temple, and on which trademarks, logos or other distinctive graphical signs of the product and/or the producer can be reported.

According to another variant, the box-like body comprises a plurality of anchoring elements which allow the correct and secure positioning of the articulation element on the temple.

According to a variant, for example in the case of a combined frame, the second articulation element is made directly on the front piece or on the lug.

According to another variant, the second articulation element comprises a central body with a thickness S 1 comprised in the bulk of the relative front piece or lug.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a three-dimensional view of an elastic hinge according to the present invention mounted on a frame made of plastic material;
- fig. 2 is an enlargement of the elastic hinge in fig. 1;
- fig. 3 is an exploded view of fig. 2;
- fig. 4 is a partly sectioned lateral view of fig. 1;
- fig. 5 is a first variant of fig. 2;
- fig. 6 is an exploded view of fig. 5;
- fig. 7 is a partly sectioned schematic view of a second variant of the hinge in fig. 2;
- fig. 8 is a partly sectioned schematic view of a third variant of the hinge in fig. 2;
- fig. 9 is a partly sectioned schematic view of a fourth variant of the hinge in fig. 2;
- fig. 10 is a partly sectioned schematic view of a fifth variant of the hinge in fig. 2;
- fig. 11 is a partly sectioned schematic view of a sixth variant of the hinge in fig. 2;
- fig. 12 is a three-dimensional view of a seventh variant of the hinge according to the present invention, mounted on a combined frame;
- fig. 13 is a three-dimensional view of an eighth variant of the elastic hinge according to the present invention;
- fig. 14 is a three-dimensional view of a ninth variant of the elastic hinge according to the present invention;
- fig. 15 is a three-dimensional view of a tenth variant of the elastic hinge according to the present invention.

### DETAILED DESCRIPTION OF A PREFERENTIAL FORM OF EMBODIMENT

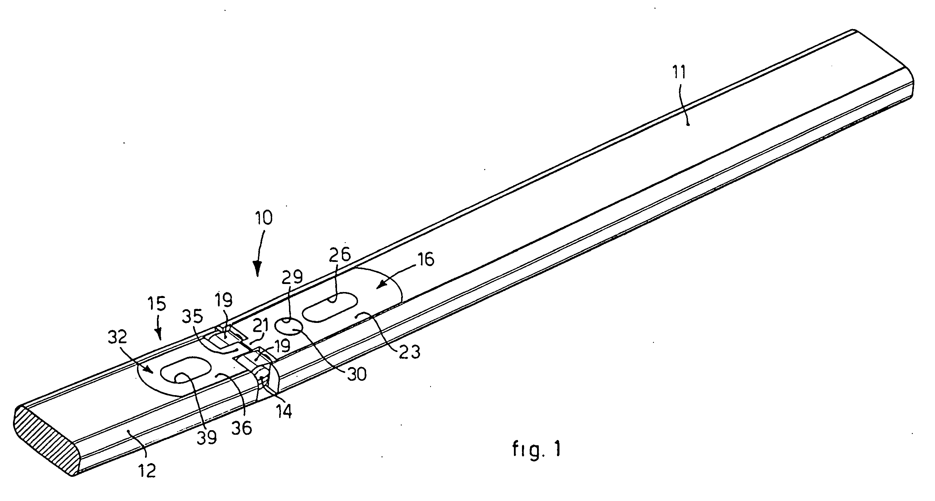

With reference to fig. 1, a hinge for spectacles 10 according to the present invention is applied to articulate reciprocally a temple 11 to a lug 12 of a frame for spectacles, advantageously but not exclusively made of plastic material.

In particular, the hinge 10 according to the present invention is of the elasticized type, that is, able to allow an extra-travel on opening of the temples 11 with a desired elastic return, to facilitate the operations of putting on the spectacles and the conditions of wearing them.

Both the temple 11 and the lug 12 in this case have a desired aesthetic conformation characterized by a reduced thickness and a greater width with respect to classic filiform temples for spectacles.

The hinge 10 traditionally comprises two articulation elements, respectively a first 13, in this case associated with the temple 11, and a second 15, associated with the lug 12, both made in this case of metal and reciprocally pivoted to each other by means of a pin 14, for example of the screw type.

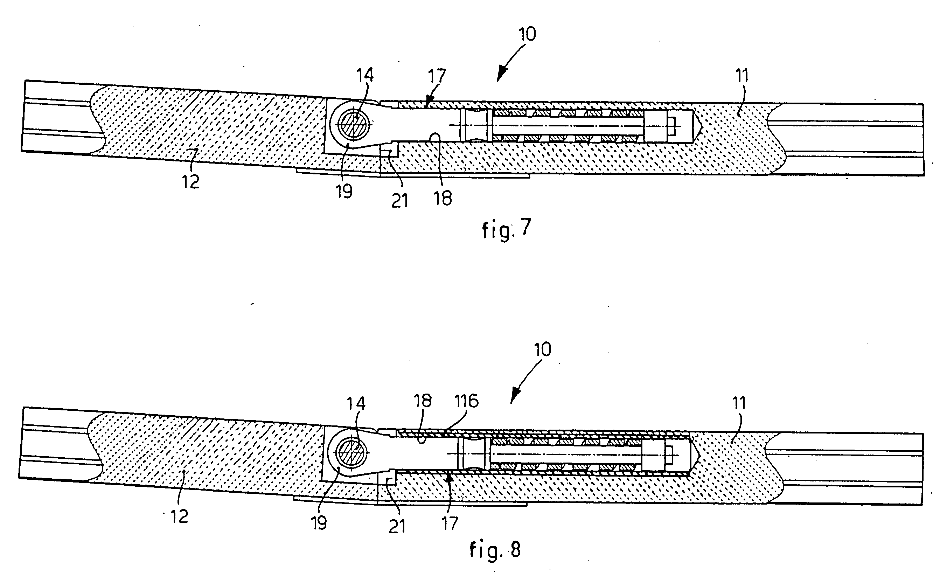

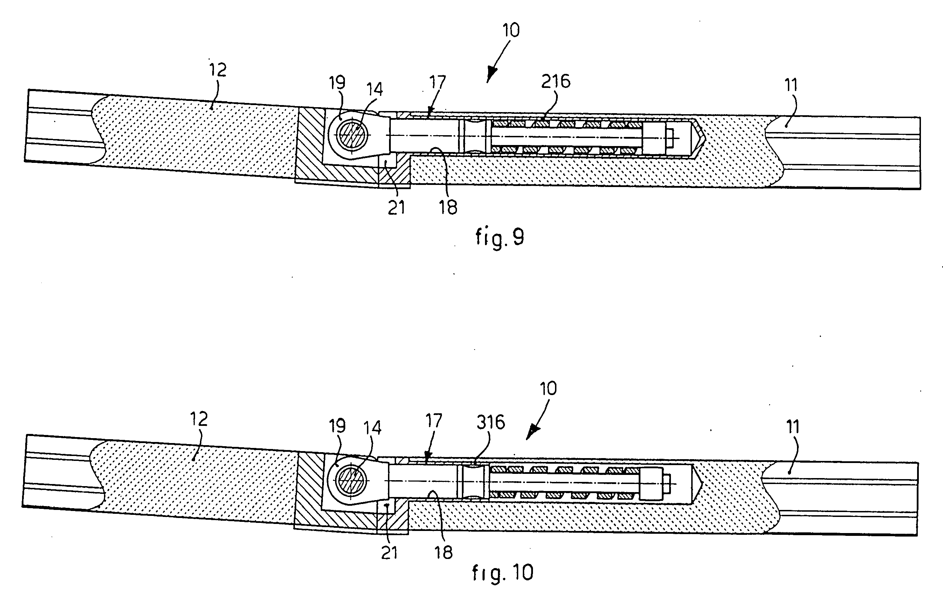

In the form of embodiment shown in the attached drawings specific reference is made to an elastic hinge 10 of the type having two specific articulation elements 13 and 15, originally separated by the relative 11 and lug 12, but it cannot be excluded that the present invention may equally be applied to embodiments where the various components of the hinge 10 are at least partly made directly on the temple 11 and the lug 12 (figs. 7, 8, 9 and 10).

In these embodiments, directly on the thickness of the temple 11, two longitudinal cavities 18 are made, in which respective elastic sliders 17 are able to be housed, to elasticize the hinge 10.

In the embodiments shown in figs. 8, 9 and 10, inside the longitudinal cavities 18 corresponding tubular guide elements 116, 216 and 316 are disposed, with respect to which the respective elastic sliders 17 at least partly slide.

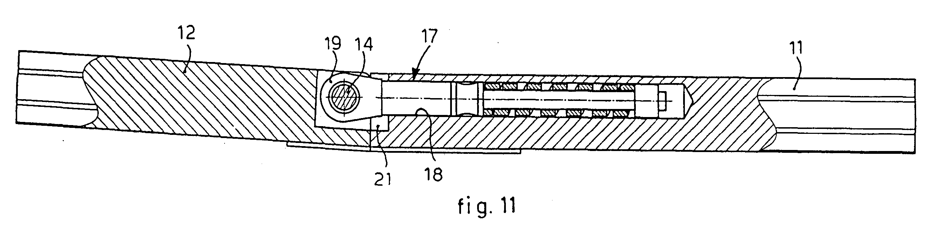

According to the variant in fig. 11, the temple 11 is made completely of metal.

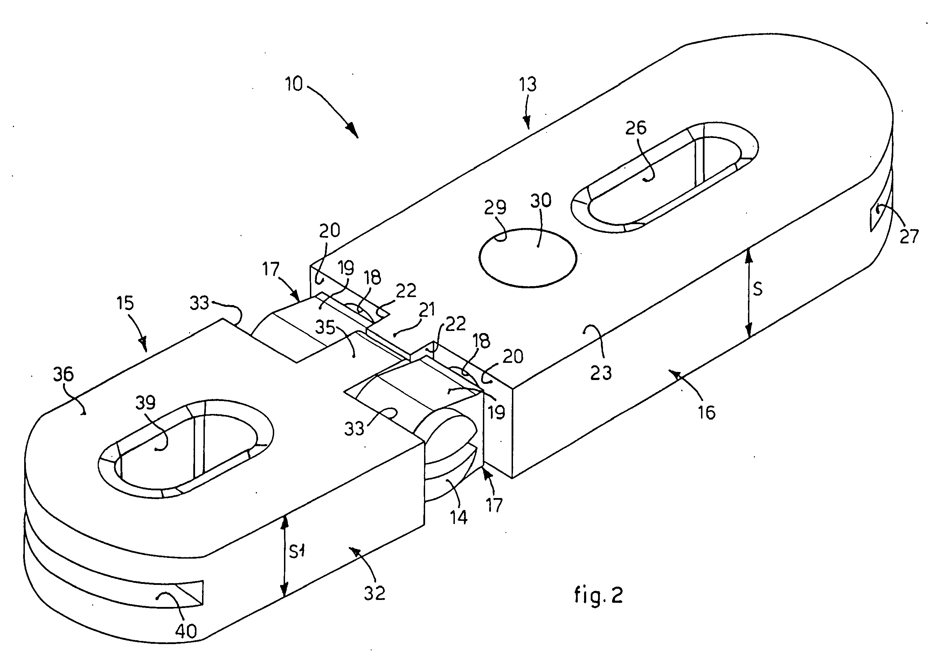

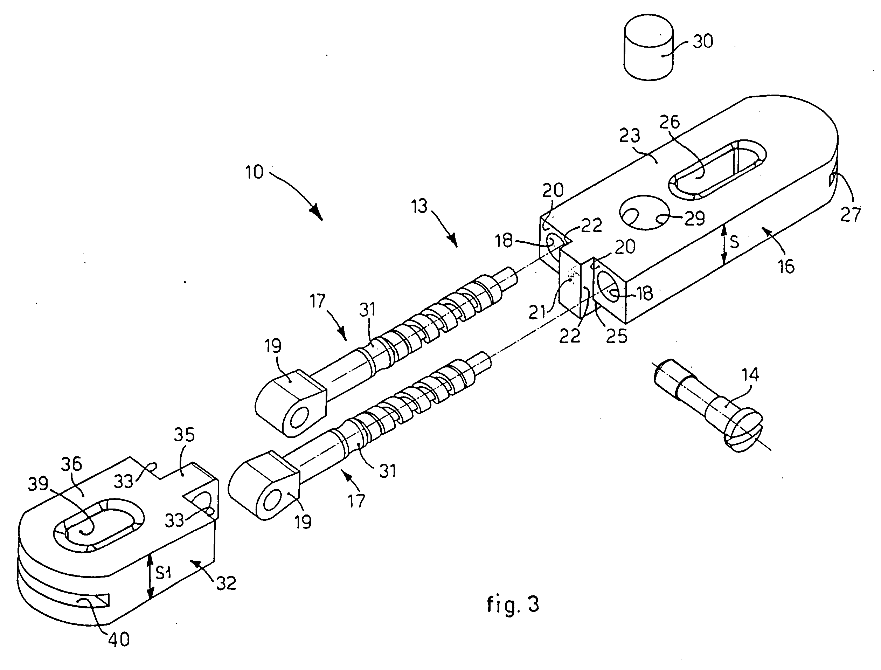

In the form of embodiment shown in figs. 1 to 4, the first articulation element 13 and the second articulation element 15 are associated respectively with the temple 11 and the lug 12, by drowning during the steps of injecting the plastic material that makes up the temple 11 and the lug 12.

In this case, the first articulation element 13 comprises a box-like body 16 and two elastic sliders, each indicated in their entirety by the reference number 17, substantially parallel and independent with respect to each other, and at least partly housed in relative longitudinal cavities 18 made in the box-like body 16. Each elastic slider 17 is also provided with an external hinging portion or eyelet 19, with which it determines the pivoting to the second articulation element 15.

In particular, the box-like body 16 has a thickness S, in this case less than the thickness of the temple 11, so as to be substantially comprised within the bulk of the thickness of the latter.

Moreover, the box-like body 16 comprises a head surface 20, substantially facing the second articulation element 15 and from which the two longitudinal cavities 18 open, toward the inside of the box-like body 16.

From the head surface 20 an abutment 21 extends toward the outside, made in an intermediate position with respect to the two longitudinal cavities 18.

The abutment 21 has respective lateral surfaces 22, in this case conformed plane, so as to cooperate laterally with the hinging eyelets 19, and more generally with the two elastic sliders 17, so that the latter are both guided during their sliding with respect to the relative longitudinal cavity 18, and also prevented in their possible axial rotation in the dis-assembled condition of the first articulation element 13 from the second articulation element 15.

In this way, the two hinging eyelets 19 are kept, even in the dis-assembled condition, substantially aligned with respect to the hinging axis of the hinge 10, thus facilitating the automated assembly operations.

The first articulation element 13 also comprises a visible surface 23 disposed substantially co-planar with an external surface of the temple 11, in this case facing toward the inside of the frame.

In this case, the abutment 21 extends with respect to the thickness S of the box-like body 16 in the direction opposite to the visible surface 23, so as to define a relative decoration element 25 which, in this case, slightly protrudes from an external surface of the temple 11, facing toward the outside of the frame.

Advantageously, on the visible surface 23 and/or on the decoration element 25, specific trademarks, logos or other distinctive or identifying signs of the product and/or the producer are made.

The box-like body 16 also comprises a through eyelet 26, flared along the edges, and one or more transverse slits 27, able to allow, during the steps of forming the temple 11 through injection, the plastic material to penetrate inside them and to define the mechanical anchorage of the box-like body 16 and the temple 11, guaranteeing the reciprocal and secure positioning thereof.

The box-like body 16 also comprises a central hole 29 made at least partly intersecting with both longitudinal cavities 18, and able to accommodate inside it a clamping pin 30 able to cooperate with corresponding clamping bushings 31 of the two elastic sliders 17. In this way, the two bushings 31 are made solid with the box-like body 16, thus preventing the elastic sliders 17 from accidentally coming out of the respective longitudinal cavities 18.

The second articulation element 15 comprises a central body 32 having a thickness S 1, less than the thickness of the lug 12 and in this case substantially equivalent to the thickness S of the first articulation element 13.

The central body 32 comprises a relative head surface 33, substantially facing the head surface 20 of the first articulation element 13, and on which, in a substantially median position, a hinging element 35 is made, possibly an eyelet. The latter is able to be interposed between the hinging eyelets 19 of the two elastic sliders 17, to allow the correct positioning of the pin 14, and hence the articulation of the first articulation element 13 and the second articulation element 15.

In particular, the hinging eyelet 35 is able to cooperate frontally with the abutment 21, to define at least an open position and a closed position of the temple 11, and also to define an angle of extra-opening.

The central body 32 also comprises a visible surface 36, substantially co-planar with an external surface of the lug 12, facing toward the inside of the frame.

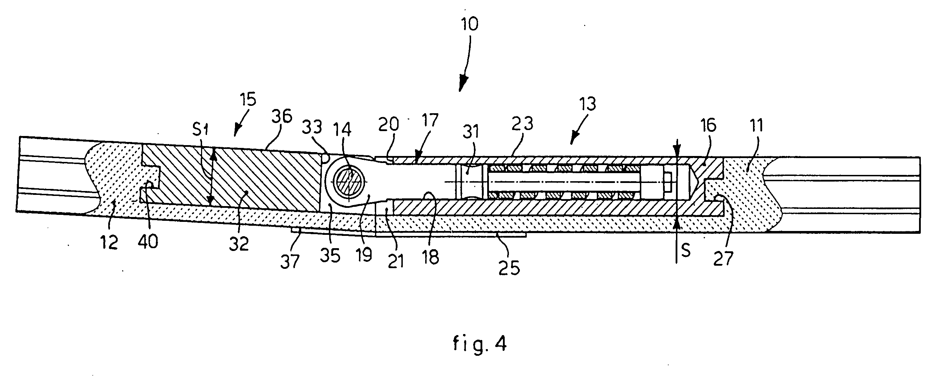

In this case, the hinging eyelet 35 extends with respect to the thickness S1 of the central body 32, in the opposite direction to the visible surface 36, so as to define a relative decoration element 37 (fig. 4) which, in this case, slightly protrudes, advantageously in a manner equivalent to the decoration element 25, from an external surface of the lug 12, facing toward the outside of the frame.

Advantageously, on the visible surface 36 and/or on the decoration element 37, specific trademarks, logos or other distinctive or identifying signs of the product and/or the producer are made, both distinct from and combined with those provided on the corresponding visible surface 23 and/or on the decoration element 25 of the first articulation element 13.

The central body 32 also comprises a through eyelet 39, flared along the edges, and one or more transverse slits 40, able to allow, during the steps of forming the lug 12 through injection, the plastic material to penetrate inside them and to define the mechanical anchorage of the central body 32 and the lug 12, guaranteeing the reciprocal and secure positioning thereof.

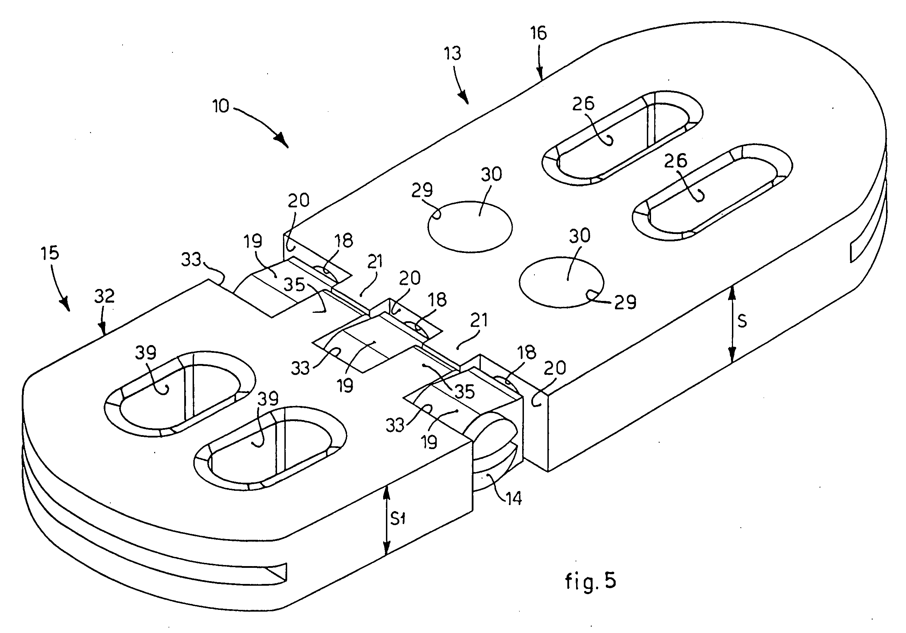

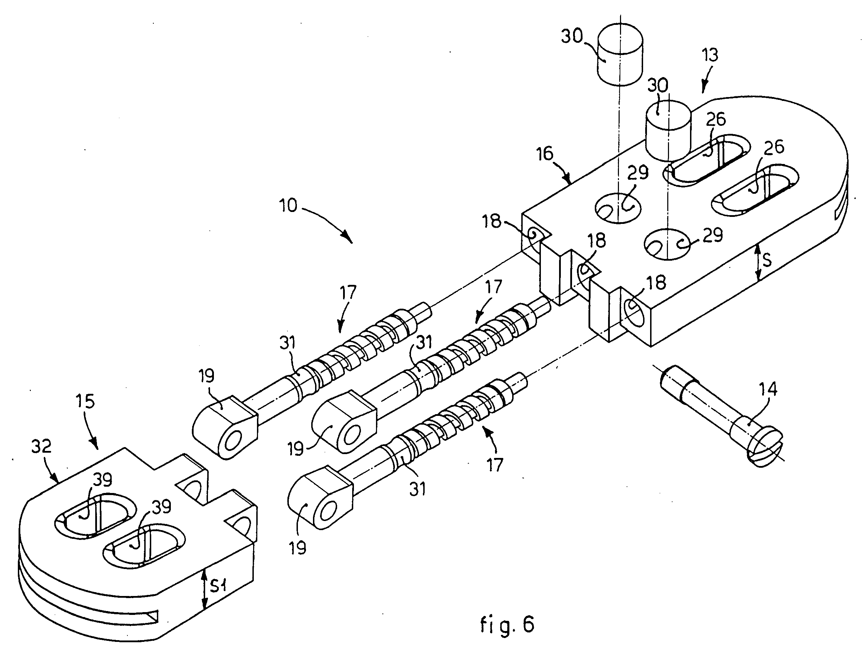

According to the variant shown in figs. 5 and 6, the box-like body 16 of the first articulation element 13 comprises three longitudinal cavities 18, in which three elastic sliders 17 are able to be accommodated. This variant is particularly advantageous for very wide temples or where a high load of the elastic mechanism is required.

In this solution, on the head surface 20 two abutments 21 are made, interposed between the relative longitudinal cavities 18, to cooperate with the relative hinging eyelets 19, so as to guide the sliding and to prevent the axial rotation of the three elastic sliders 17.

Moreover, in this case, the box-like body 16 comprises two through eyelets 26 and two holes 29.

Consequently, the central body 32 of the second articulation element 15 comprises two hinging eyelets 35 made on its head surface 33, able to cooperate with the relative abutments 21, and two through eyelets 39.

It is clear, however, that modifications and/or additions of parts may be made to the elastic hinge 10 as described heretofore, without departing from the field and scope of the present invention.

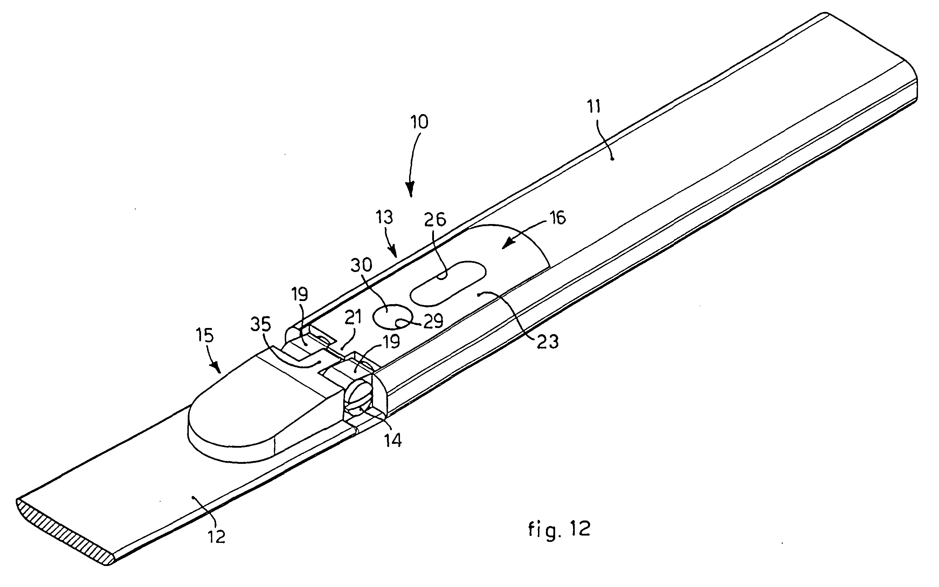

For example, the variant shown in fig. 12 comes within the field of the present invention, wherein the elastic hinge 10 is applied to a combined frame, that is, temples 11 made of plastic material associated with a front piece 12 made of metal. In this solution, the second articulation element 15 is mounted on the corresponding front or lug made of metal material, or it can also be made in a single piece therewith.

It also comes within the field of the present invention to provide that both the first articulation element 13 and the second articulation element 15 are completely disposed inside the thickness of the relative temple 11 and lug 12, that is, without providing visible surfaces 23, 36 or decoration elements 25, 37.

According to a variant, the decoration elements 25 and 37, or only one of the two, has an extension on the external surface of the relative temple 11 or lug 12, substantially equivalent to the corresponding visible surface 23, 36.

According to another variant, both for the first articulation element 13 and for the second articulation element 15 only the visible surface 23, 36 is provided, without the decoration element 25, 37.

According to another variant, both for the first articulation element 13 and for the second articulation element 15 only the decoration element 25, 37 is provided, without the visible surface 23, 36.

According to another variant, the first articulation element 13 comprises four or more elastic sliders 17, with a consequent variation in the number of abutments 21.

Furthermore, the two elastic sliders 17 can be of the type with the pins connected as a U to the internal end, and elasticized by a single helical or Greek spiral spring, disposed centrally. In this solution the through eyelet 26 can be doubled and made in lateral zones of the box-like body 16.

It also comes within the field of the present invention to provide that the first articulation element 13 and the second articulation element 15, instead of being associated with the respective temple 11 and lug 12 by means of drowning during injection, can be associated with the latter by same-shape coupling or by snap-in attachment, or by welding or other known processes, possibly in relative preformed recesses.

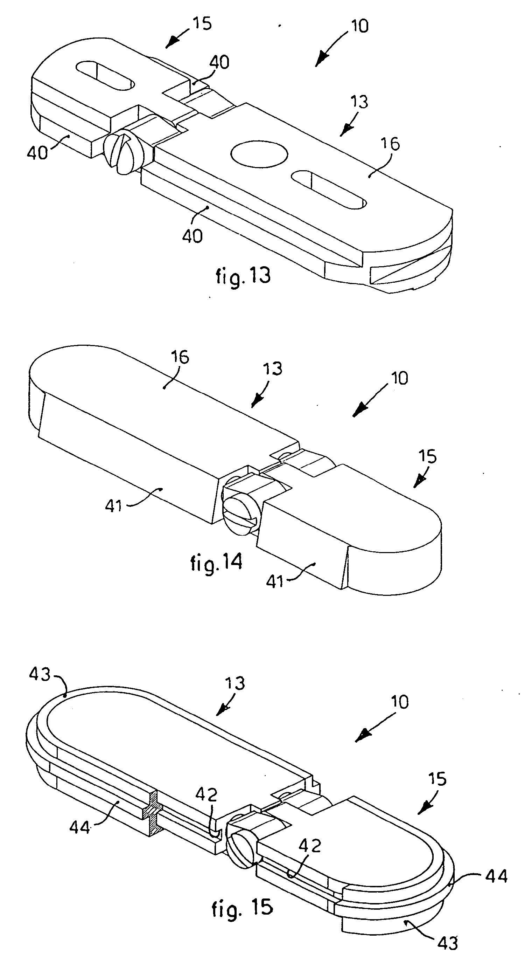

For example, as shown in figs. 13, 14 and 15, the box-like body 16 of the first articulation element 13 and the second articulation element 15 have lateral relative attachment portions protruding from their own bulk, in order to improve the attachment conditions of the hinge 10 to the temple 11 and the lug 12.

In particular, in the variant in fig. 13, the first articulation element 13 and the second articulation element 15 have laterally relative longitudinal attachment ribs 40. This solution is particularly advantageous in frames made of injected plastic material.

In the variant shown in fig. 14, the first articulation element 13 and the second articulation element 15 have laterally relative inclined attachment walls 41 so as to define a substantially dovetailed transverse section. This solution is particularly advantageous in frames made of metal material, for example aluminum.

In the variant shown in fig. 15, the first articulation element 13 and the second articulation element 15 have laterally relative longitudinal grooves 42, with which a coordinated attachment element 43 is associated. The latter is made of plastic material and is provided externally with a longitudinal attachment rib 44. This solution is particularly advantageous in frames made of magnesium, to prevent the material that makes up the hinge 10 for example alpacca, from corroding the magnesium through direct contact.

Both the solution shown in fig. 14 and the solution shown in fig. 15 can be consolidated in coupling by means of gluing, or by hardware elements such as rivets, screws or other.

It is also clear that, although the present invention has been described with reference to specific examples, a person of skill in the art shall certainly be able to achieve many other equivalent forms of elastic hinge, having the characteristics as set forth in the claims and hence all coming within the field of protection defined thereby.

## Claims

1. Elastic hinge for spectacles able to articulate with respect to each other a first component (11) and a second component (12) of a frame for spectacles, said hinge comprising two articulation elements (13, 15) pivoted to each other, and associated respectively with the first component (11) and the second component (12), at least a first (13) of said two articulation elements (13, 15) comprising:
- a box-like body (16) having at least two longitudinal cavities (18) open toward a head surface (20) of said box-like body (16) and
- at least two elastic sliders (17) made of metal and substantially parallel to each other and housed slidingly inside said longitudinal cavities (18), wherein each elastic slider (17) comprises a relative hinging portion (19) protruding from the head surface (20) of said box-like body (16) and cooperating with a corresponding hinging portion (35) of the second component (12), **characterized in that**
- there is at least an abutment element (21) in the first articulation element (13), made on the head surface (20) of said box-like body (16) in a position adjacent to the longitudinal cavities (18) and shaped so as to cooperate through lateral sliding with the hinging portion (19), both to guide the sliding and also to constrain the axial rotation of the at least two elastic sliders (17), said at least an abutment element (21) being made on the head surface (20) of said box-like body (16) in an intermediate position between the at least two elastic sliders (17), so as to cooperate with both in order to guarantee the correct sliding thereof and to prevent the axial rotation thereof,
- **in that** said box-like body (16) comprises at least a hole (29) made at least partly intersecting with both said at least two longitudinal cavities (18)
- and **in that** said first articulation element (13) comprises at least a clamping pin (30) able to be accommodated inside said at least a hole (29) for clamping said at least two elastic sliders (17).

2. Elastic hinge as in claim 1, **characterized in that** the longitudinal cavities (18) are made directly on said first component (11).

3. Elastic hinge as in claim 2, **characterized in that** inside the longitudinal cavities (18) corresponding tubular guide elements (116) are disposed, with respect to which the respective elastic sliders (17) slide.

4. Elastic hinge as in any claim hereinbefore, **characterized in that** at least said first (13) of the articulation elements has a thickness (S) substantially equal to or less than the thickness of the first component (11).

5. Elastic hinge as in any claim hereinbefore, wherein a second (15) of the articulation elements is associated with the second component (12) and has a determinate thickness (S1) substantially equal to or less than the thickness of the second component (12), **characterized in that** it comprises a relative hinging portion (35) made directly on the second component (12), able to be hinged to the corresponding hinging portion (19) of the elastic slider (17), and able to cooperate with the abutment element (21) to define respective positions of reciprocal opening and closing of the two components (11, 12).

6. Elastic hinge as in claim 5, further comprising a central body (32), **characterized in that** said hinging portion (35) is made on a head surface (33) of the central body (32).

7. Elastic hinge as in claims 6, **characterized in that** the box-like body (16) and/or the central body (32) comprises at least a respective visible portion (23, 25, 36, 37) substantially co-planar or slightly protruding with respect to an external surface of the respective component (11, 12), and on which trademarks, logos or other distinctive graphical signs of the product and/or the producer are reported.

8. Elastic hinge as in claim 6 or 7, **characterized in that** the box-like body (16) and/or the central body (32) comprises a plurality of anchoring elements (26, 27, 39, 40) able to allow the correct and secure positioning of the respective articulation element (13, 15) on the corresponding component (11, 12).

9. Elastic hinge as in any claim hereinbefore, wherein the first articulation element (13) comprises three or more elastic sliders (17) substantially parallel to each other and housed slidingly in an equal number of longitudinal cavities (18), **characterized in that** it comprises a plurality of abutment elements (21), each made on said head surface (20) in an intermediate position between two successive elastic sliders (17).

10. Elastic hinge as in any claim hereinbefore, **characterized in that** said abutment element (21) is made of metal material.

11. Elastic hinge as in any claim hereinbefore, **characterized in that** the first articulation element (13) and/or the second articulation element (15) has on at least one side relative attachment portions (40, 41, 44), protruding from their own bulk, and able to improve the attachment conditions of the hinge (10) to said first component (11) and/or said second component (12).

12. Elastic hinge as in claim 1, **characterized in that** the abutment element (21) extends with respect to the thickness (S) of the box-like body (16) in the direction opposite to a visible surface (23) of the first articulation element (13) disposed substantially co-planar with an external surface of the first component (11), so as to define a relative decoration element (25) which slightly protrudes from an external surface of the first component (11).

## Patentansprüche

1. Elastisches Scharnier für Brillen, bei denen ein erster Teil (11) und ein zweiter Teil (12) einer Brillenfassung gelenkig miteinander verbindbar sind, wobei das Scharnier zwei Gelenkelemente (13, 15) umfasst, die miteinander gelenkig verbunden sind und dem ersten Teil (11) bzw. dem zweiten Teil (12) zugeordnet sind, wobei wenigstens das erste (13) der beiden Gelenkelemente (13, 15) umfasst:
- einen kastenartigen Körper (16), der wenigstens zwei zu einer Stirnseite (20) des kastenartigen Körpers (16) offene Längshohlräume (18) aufweist, und
- wenigstens zwei elastische Gleitstücke (17) aus Metall, die im wesentlichen parallel zueinander und im Inneren der Längshohlräume (18) verschiebbar untergebracht sind, wobei jedes elastische Gleitstück (17) einen relativen Scharnierabschnitt (19) umfasst, der von der Stirnseite (20) des kastenartigen Körpers (16) vorsteht und mit einem entsprechenden Scharnierabschnitt (35) des zweiten Teils (12) zusammenwirkt, **dadurch gekennzeichnet, dass**
- wenigstens ein Anschlagelement (21) im ersten Gelenkelement (13) vorhanden ist, das an der Stirnseite (20) des kastenartigen Körpers (16) in einer Position benachbart den Längshohlräumen (18) gebildet und so geformt ist, dass es durch seitliches Verschieben mit dem Scharnierabschnitt (19) zusammenwirkt, damit beide das Verschieben führen und auch die axiale Drehung der wenigstens zwei elastischen Gleitstücke (17) beschränkt, wobei wenigstens ein Anschlagelement (21) an der Stirnseite (20) des kastenartigen Körpers (16) in einer Zwischenposition zwischen den wenigstens zwei elastischen Gleitstücken (17) gebildet ist, damit es mit beiden zusammenwirkt, um deren korrektes Verschieben zu garantieren und ihre axiale Drehung zu vermeiden,
- dass der kastenartigen Körper (16) wenigstens ein Loch (29) umfasst, das gebildet ist, so dass es sich wenigstens teilweise mit beiden der wenigstens zwei Längshohlräume (18) schneidet,
- und dass das erste Gelenkelement (13) wenigstens einen Klemmstift (30) umfasst, der im Inneren des wenigstens einen Lochs (29) aufgenommen werden kann, um die wenigstens zwei elastischen Gleitstücke (17) zu klemmen.

2. Elastisches Scharnier nach Anspruch 1, **dadurch gekennzeichnet, dass** die Längshohlräume (18) direkt am ersten Teil (11) gebildet sind.

3. Elastisches Scharnier nach Anspruch 2, **dadurch gekennzeichnet, dass** im Inneren der Längshohlräume (18) entsprechende rohrförmige Führungselemente (116) vorgesehen sind, in Bezug auf die die entsprechenden elastischen Gleitstücke (17) gleiten.

4. Elastisches Scharnier nach einem beliebigen vorhergehenden Anspruch, **dadurch gekennzeichnet, dass** wenigstens das erste (13) der Gelenkelemente eine Dicke (S) im Wesentlichen gleich oder kleiner als die Dicke des ersten Teils (11) aufweist.

5. Elastisches Scharnier nach einem beliebigen vorhergehenden Anspruch, bei dem ein zweites (15) der Gelenkelemente dem zweiten Teil (12) zugeordnet ist und eine bestimmte Dicke (S1) im Wesentlichen gleich oder kleiner als die Dicke des zweiten Teils (12) aufweist, **dadurch gekennzeichnet, dass** es einen direkt am zweiten Teil gebildeten, relativen Scharnierabschnitt (35) umfasst, der mit dem entsprechenden Scharnierabschnitt (19) des elastischen Gleitstücks (17) gelenkig verbindbar ist und in der Lage ist, mit dem Anschlagelement (21) zusammenzuwirken, um entsprechende Positionen des wechselweisen Öffnens und Schließens der beiden Teile (11, 12) zu definieren.

6. Elastisches Scharnier nach Anspruch 5, weiter umfassend einen zentralen Körper (32), **dadurch gekennzeichnet, dass** der Scharnierabschnitt (35) an einer Stirnseite (33) des zentralen Körpers (32) gebildet ist.

7. Elastisches Scharnier nach Anspruch 6, **dadurch gekennzeichnet, dass** der kastenartige Körper (16) und/oder der zentrale Körper (32) wenigstens einen entsprechenden sichtbaren Abschnitt (23, 25, 36, 37) umfasst, der im Wesentlichen koplanar oder geringfügig vorstehend in Bezug auf eine Außenfläche des entsprechenden Teils (11, 12) ist und auf dem Marken, Logos or andere spezifische graphische Zeichen des Produkts und/oder des Herstellers dargestellt sind.

8. Elastisches Scharnier nach Anspruch 6 oder 7, **dadurch gekennzeichnet, dass** der kastenartige Körper (16) und/oder der zentrale Körper (32) eine Anzahl von Verankerungselementen (26, 27, 39, 40) umfasst, um das korrekte und sichere Positionieren des entsprechenden Gelenkelements (13, 15) am entsprechenden Teil (11, 12) zu gestatten.

9. Elastisches Scharnier nach einem beliebigen vorhergehenden Anspruch, bei dem das erste Gelenkelement (13) drei oder mehr elastische Gleitstücke (17) umfasst, die im Wesentlichen zueinander parallel sind und in einer gleichen Anzahl von Längshohlräumen (18) untergebracht sind, **dadurch gekennzeichnet, dass** es eine Anzahl von Anschlagelementen (21) umfasst, die jeweils an der Stirnseite (20) in einer Zwischenposition zwischen zwei aufeinanderfolgenden elastischen Gleitstücken (17) gebildet sind.

10. Elastisches Scharnier nach einem beliebigen vorhergehenden Anspruch, **dadurch gekennzeichnet, dass** das Anschlagelement (21) aus Metallmaterial hergestellt ist.

11. Elastisches Scharnier nach einem beliebigen vorhergehenden Anspruch, **dadurch gekennzeichnet, dass** das erste Gelenkelement (13) und/oder das zweite Gelenkelement (15) an wenigstens einer Seite relative Befestigungsabschnitte (40, 41, 44) aufweist, die von ihrem Hauptteil vorstehen und geeignet sind, die Befestigungsbedingungen des Scharniers (10) zu dem ersten Teil (11) und/oder dem zweiten Teil (12) zu verbessern.

12. Elastisches Scharnier nach Anspruch 1, **dadurch gekennzeichnet, dass** sich das Anschlagelement (21) in Bezug auf die Dicke (S) des kastenartigen Körpers (16) in der Richtung entgegengesetzt zu einer sichtbaren Fläche (23) des ersten Gelenkelements (13) erstreckt, die im Wesentlichen koplanar mit einer Außenfläche des ersten Teils (11) vorgesehen ist, um ein relatives Dekorationselement (25) zu definieren, das von einer Außenfläche des ersten Teils (11) geringfügig vorsteht.

## Revendications

1. Charnière élastique pour lunettes capable d'articuler l'un par rapport à l'autre un premier composant (11) et un second composant (12) d'une monture pour lunettes, ladite charnière comprenant deux éléments d'articulation (13, 15) pivotés l'un vers l'autre, et associés respectivement au premier composant (11) et au second composant (12), au moins un premier (13) desdits deux éléments d'articulation (13, 15) comprenant :
- un corps de type boîte (16) doté d'au moins deux cavités longitudinales (18) ouvertes vers une surface de tête (20) dudit corps de type boîte (16) et
- au moins deux pièces coulissantes élastiques (17) fabriquées en métal et sensiblement parallèles l'une à l'autre et logées de manière coulissante à l'intérieur desdites cavités longitudinales (18), dans laquelle chaque pièce coulissante élastique (17) comprend une partie d'articulation relative (19) faisant saillie de la surface de tête (20) dudit corps de type boîte (16) et coagissant avec une partie d'articulation correspondante (35) du second composant (12), **caractérisée en ce que**
- au moins un élément de butée (21) dans le premier élément d'articulation (13) se situe sur la surface de tête (20) dudit corps de type boîte (16) dans une position adjacente aux cavités longitudinales (18) et est formé de manière à coagir par coulissement latéral avec la partie d'articulation (19), à la fois pour guider le coulissement et aussi limiter la rotation axiale desdites au moins deux pièces coulissantes élastiques (17), ledit au moins un élément de butée (21) étant situé sur la surface de tête (20) dudit corps de type boîte (16) dans une position intermédiaire entre lesdites au moins deux pièces coulissantes élastiques (17) de manière à coagir à la fois dans le but de garantir leur coulissement correct et éviter leur rotation axiale,
- **en ce que** ledit corps de type boîte (16) comprend au moins un trou (29) fabriqué au moins en partie de manière concourante avec lesdits au moins deux cavités longitudinales (18),
- et **en ce que** ledit premier élément d'articulation (13) comprend au moins une broche de serrage (30) capable d'être logée dans ledit au moins un trou (29) pour le serrage desdits au moins deux pièces coulissantes élastiques (17).

2. Charnière élastique selon la revendication 1, **caractérisée en ce que** les cavités longitudinales (18) sont directement situées sur ledit premier composant (11).

3. Charnière élastique selon la revendication 2, **caractérisée en ce que** des éléments de guide tubulaires (116) correspondants sont disposés dans les cavités longitudinales (18), par rapport auxquels les pièces coulissantes élastiques respectifs (17) coulissent.

4. Charnière élastique selon l'une quelconque des revendications précédentes, **caractérisée en ce qu'**au moins ledit premier (13) des éléments d'articulation présente une épaisseur (S) sensiblement égale ou inférieure à l'épaisseur du premier composant (11).

5. Charnière élastique selon l'une quelconque des revendications précédentes, dans laquelle un second (15) des éléments d'articulation est associé au second composant (12) et présente une épaisseur (S1) déterminée sensiblement égale ou inférieure à l'épaisseur du second composant (12), **caractérisée en ce qu'**elle comprend une partie d'articulation relative (35) située directement sur le second composant (12), capable d'être articulée à la partie d'articulation correspondante (19) de la pièce coulissante élastique (17), et capable de coagir avec l'élément de butée (21) pour définir des positions respectives d'ouverture et de fermeture réciproques des deux composants (11, 12).

6. Charnière élastique selon la revendication 5, comprenant en outre un corps central (32), **caractérisée en ce que** ladite partie d'articulation (35) est située sur une surface de tête (33) du corps central (32).

7. Charnière élastique selon la revendication 6, **caractérisée en ce que** le corps de type boîte (16) et/ou le corps central (32) comprend au moins une partie visible respective (23, 25, 36, 37) sensiblement coplanaire ou légèrement en saillie par rapport à une surface externe du composant respectif (11, 12) et sur laquelle des marques, des logos ou autres signes graphiques distinctifs du produit et/ou du producteur sont reportés.

8. Charnière élastique selon la revendication 6 ou 7, **caractérisée en ce que** le corps de type boîte (16) et/ou le corps central (32) comprend une pluralité d'éléments d'ancrage (26, 27, 39, 40) capables de permettre le positionnement correct et sûr de l'élément d'articulation respectif (13, 15) sur le composant correspondant (11, 12).

9. Charnière élastique selon l'une quelconque des revendications précédentes, dans laquelle le premier élément d'articulation (13) comprend trois pièces coulissantes élastiques (17), ou plus, sensiblement parallèles les unes aux autres et logées de manière coulissante dans un nombre égal de cavités longitudinales (18), **caractérisée en ce qu'**elle comprend une pluralité d'éléments de butée (21), chacune située sur ladite surface de tête (20) dans une position intermédiaire entre deux pièces coulissantes élastiques successives (17).

10. Charnière élastique selon l'une quelconque des revendications précédentes, **caractérisée en ce que** ledit élément de butée (21) est composé de matériau métallique.

11. Charnière élastique selon l'une quelconque des revendications précédentes, **caractérisée en ce que** le premier élément d'articulation (13) et/ou le second élément d'articulation (15) présente, sur au moins un côté, des parties de fixation relatives (40, 41, 44) faisant saillie à partir de leur propre masse, et capables d'améliorer les conditions de fixation de la charnière (10) audit premier composant (11) et/ou audit second composant (12).

12. Charnière élastique selon la revendication 1, **caractérisée en ce que** l'élément de butée (21) s'étend par rapport à l'épaisseur (S) du corps de type boîte (16) dans la direction opposée à une surface visible (23) du premier élément d'articulation (13) disposé de manière sensiblement coplanaire à une surface externe du premier composant (11) de sorte à définir un élément de décoration relatif (25) qui fait légèrement saillie à partir d'une surface externe du premier composant (11).
